(19)

**Europäisches Patentamt**
**European Patent Office**
**Office européen des brevets**

(11) **EP 4 769 038 A1**

(12) **EUROPEAN PATENT APPLICATION**
published in accordance with Art. 153(4) EPC

(43) Date of publication:
**01.07.2026   Bulletin 2026/27**

(21) Application number: **23949807.4**

(22) Date of filing: **28.12.2023**

(51) International Patent Classification (IPC):
***G05B 13/02*** *(2006.01)*

(52) Cooperative Patent Classification (CPC):
**G05B 13/02**

(86) International application number:
**PCT/JP2023/047327**

(87) International publication number:
**WO 2025/041352 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.08.2023   JP 2023136640**

(71) Applicant: **Panasonic Intellectual Property
Management Co., Ltd.
Kadoma-shi, Osaka 571-0057 (JP)**

(72) Inventors:
• **TOSHIHIRO, Shunsaku
  Kadoma-shi, Osaka 571-0057 (JP)**
• **FUJIWARA, Hiroshi
  Kadoma-shi, Osaka 571-0057 (JP)**
• **KAI, Koushin
  Kadoma-shi, Osaka 571-0057 (JP)**

(74) Representative: **Grünecker Patent- und
Rechtsanwälte
PartG mbB
Leopoldstraße 4
80802 München (DE)**

(54) **CONTROL PARAMETER ADJUSTMENT SUPPORT DEVICE, CONTROL PARAMETER ADJUSTMENT SUPPORT METHOD, AND PROGRAM**

(57)     A control-parameter tuning support device (80) includes a display (82), a controller (84) that causes the display (82) to display a first image (101), a second image (102), and a third image (103), and an operation part (81) that acquires an instruction concerning the first image (101) from a user. The first image (101) shows a relationship between attempt counts and evaluation values for each attempt count. The second image (102) includes each of values included in a control parameter group used for an attempt count corresponding to the instruction acquired by the operation part (81), and each of values included in a control parameter group when a best evaluation value has been acquired. The third image (103) includes a waveform that represents time series data regarding a positional deviation that is a difference between a target position and an observed position of an object that is servo-controlled by a servomotor (30) dur-ing an attempt with the attempt count corresponding to the instruction acquired by the operation part (81).

FIG. 5

**Description**

[Technical Field]

The present disclosure relates to a control-parameter tuning support device or the like.

[Background Art]

There are known to be support devices that allow users to determine whether an object to be inspected such as an automobile or a home electrical product is normal or abnormal. The support devices help acquire a feature quantity that indicates a feature of waveform data obtained at the time of actuating the object to be inspected, and at least one of control parameters used to calculate the feature quantity (see Patent Literature (PTL) 1, for example). The support devices display normal waveforms and abnormal waveforms to help the users to determine whether the object to be inspected is normal or abnormal.

[Citation List]

[PTL 1] Japanese Patent No. 3874012

[Summary of Invention]

[Technical Problem]

With the aforementioned conventional support devices, however, the users can use only the waveform data for comparison. This has a problem in that it is difficult for the users to obtain support during fine tuning of a target object.
In view of this, it is an object of the present disclosure to provide a control-parameter tuning support device or the like that allows users to obtain great support from the support device during fine tuning of a target object.

[Solution to Problem]

In order to achieve the object described above, a control-parameter tuning support device according to one aspect of the present disclosure is a control-parameter tuning support device for supporting tuning of each value included in a control parameter group that is set in a servo control device when the servo control device controls a servomotor. The control-parameter tuning support device includes a display, a controller that causes the display to display, on one screen, at least a first image, a second image, and a third image, and an operation part that acquires an instruction concerning the first image from a user. The first image shows a relationship between an attempt count and an evaluation value for the attempt count, the relationship being obtained during a search for values included in a best control parameter group, the search being conducted by the servo control device repeating an attempt to control the servomotor while changing each value included in the control parameter group. The second image includes each of values included in a control parameter group used for an attempt count corresponding to the instruction acquired by the operation part, and each of values included in a control parameter group when a best evaluation value has been acquired. The third image includes a waveform that represents time series data regarding a positional deviation that is a difference between a target position and an observed position of an object that is servo-controlled by the servomotor during an attempt with the attempt count corresponding to the instruction acquired by the operation part.
In order to achieve the object described above, a control-parameter tuning support method according to one aspect of the present disclosure is a control-parameter tuning support method for supporting tuning of each of values included in a control parameter group that is set in a servo control device when the servo control device controls a servomotor. The control-parameter tuning support method includes causing a display to display, on one screen, at least a first image, a second image, and a third image, and acquiring an instruction concerning the first image from a user. The first image shows a relationship between an attempt count and an evaluation value for the attempt count, the relationship being obtained during a search for values included in a best control parameter group, the search being conducted by the servo control device repeating an attempt to control the servomotor while changing each of the values included in the control parameter group. The second image includes each of values included in a control parameter group used for an attempt count corresponding to the instruction acquired in the acquiring, and each of values included in a control parameter group when a best evaluation value has been acquired. The third image includes a waveform that represents time series data regarding a positional deviation that is a difference between a target position and an observed position of an object that is servo-controlled by the servomotor during an attempt with the attempt count corresponding to the instruction acquired in the acquiring.

In order to achieve the object described above, a program according to one aspect of the present disclosure causes a computer to execute processing included in the control-parameter tuning support method described above.

[Advantageous Effects of Invention]

The present disclosure provides a control-parameter tuning support device or the like that allows a user to obtain great support from the support device during fine tuning of a target object.

[Brief Description of Drawings]

[FIG. 1]

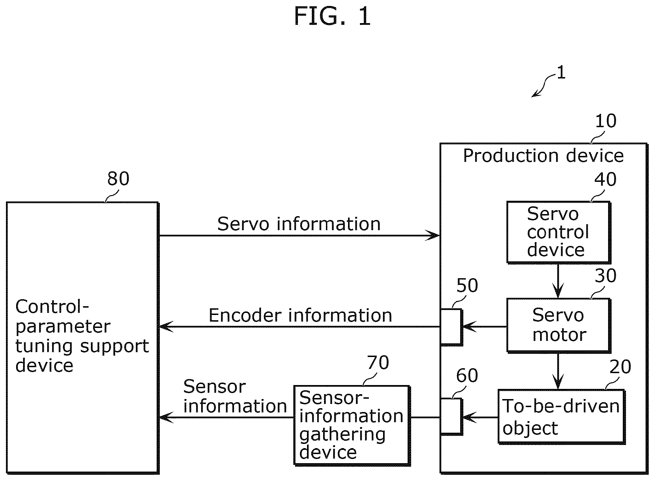

FIG. 1 is a diagram showing an overview of a production system according to an embodiment.
[FIG. 2]

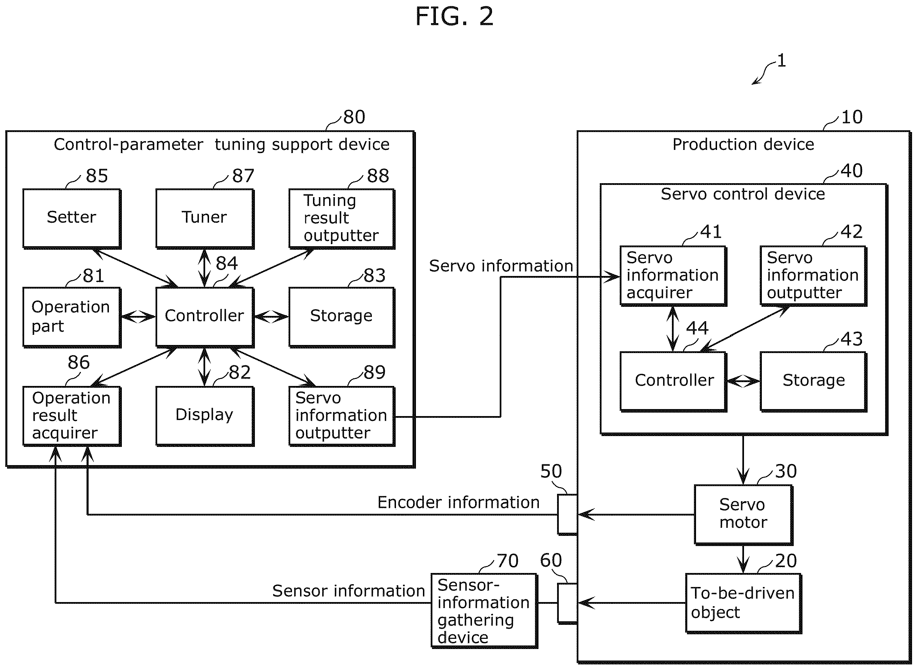

FIG. 2 is a block diagram showing a functional configuration of the production system according to the embodiment.
[FIG. 3]

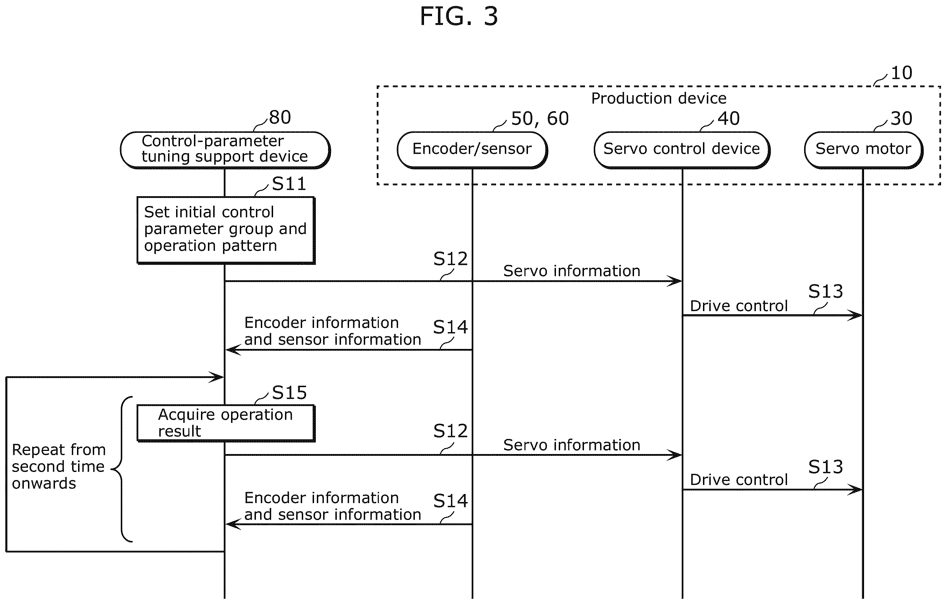

FIG. 3 is a sequence diagram showing a procedure of an attempt made to search for a best control parameter group by the production system according to the embodiment.
[FIG. 4]

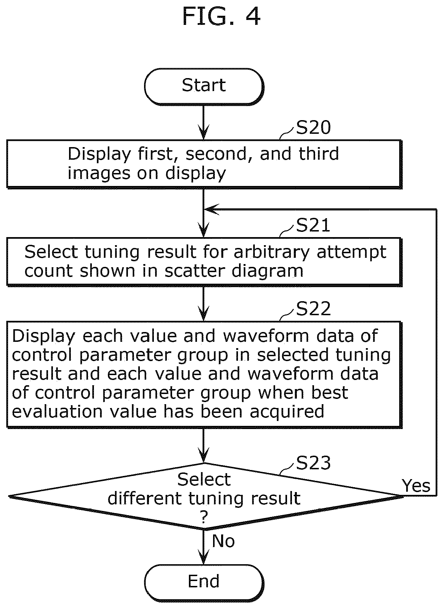

FIG. 4 is a flowchart showing a first example of display in which, in the control-parameter tuning support device according to the embodiment, a controller causes a display to display a tuning result obtained by the search shown in FIG. 3.
[FIG. 5]

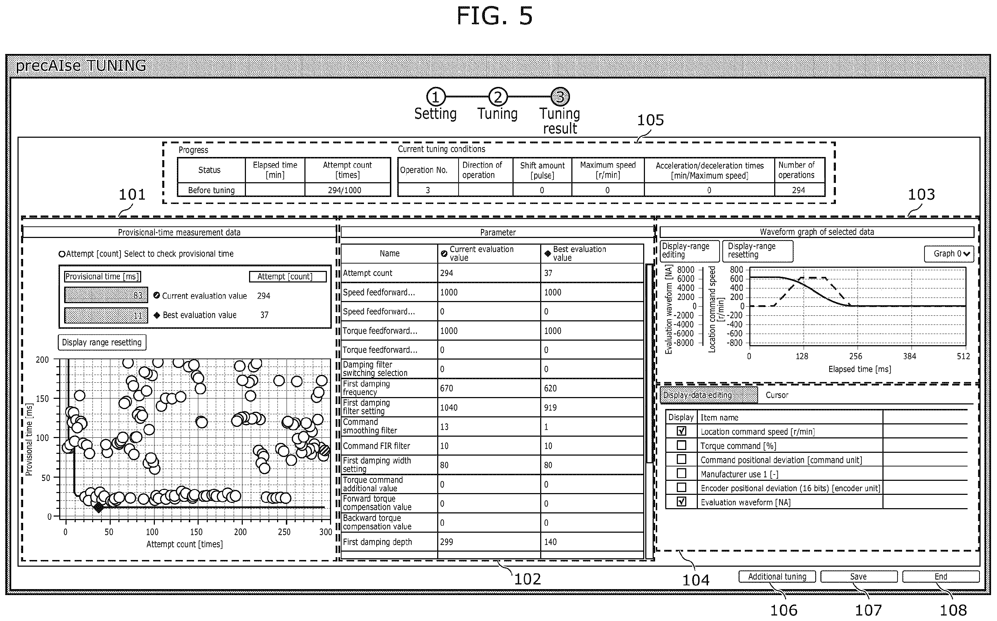

FIG. 5 is a diagram showing an example of images displayed on the display by the controller shown in FIG. 4.
[FIG. 6]

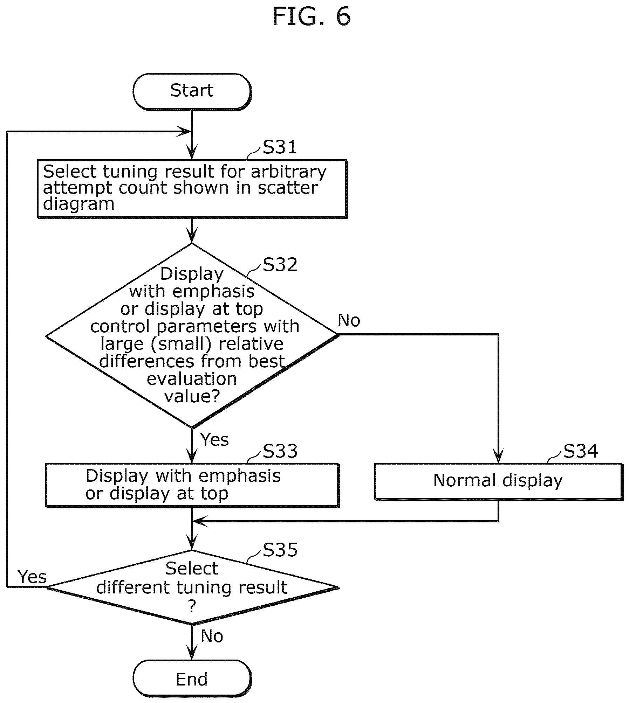

FIG. 6 is a flowchart showing another example of the procedure for turning control parameters in the control-parameter tuning support device according to the embodiment.
[FIG. 7]

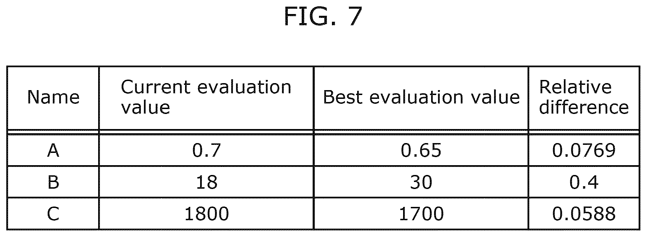

FIG. 7 is a diagram showing a table for describing an example of calculation of a relative difference described with reference to FIG. 6.
[FIG. 8]

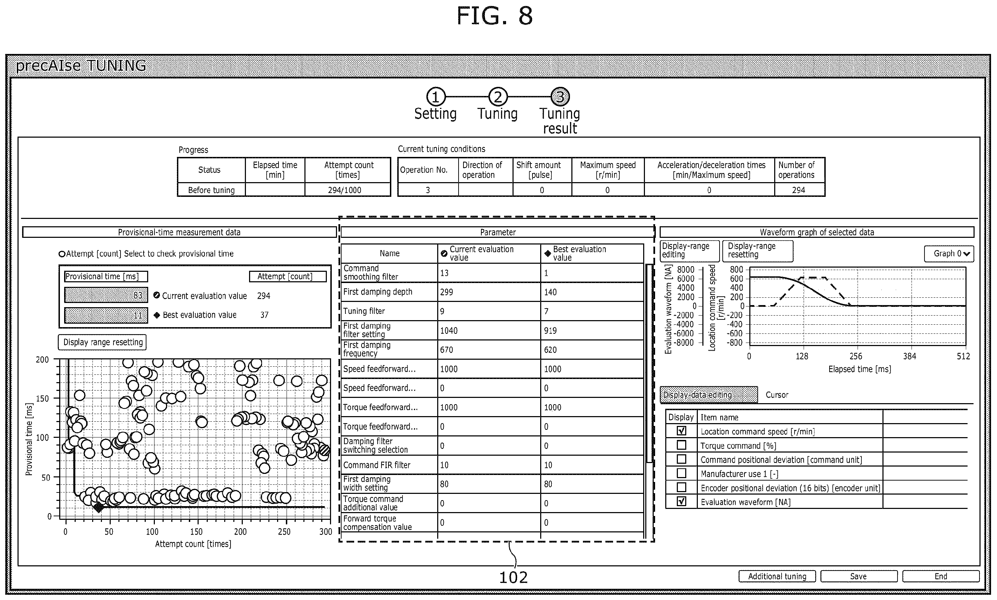

FIG. 8 is a diagram showing an example of images displayed on the display by the controller in the case of determining Yes in step S32 shown in FIG. 6.
[FIG. 9]

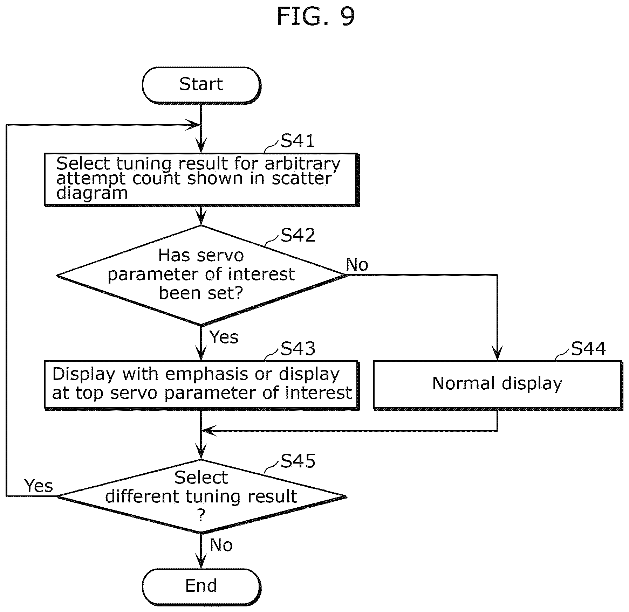

FIG. 9 is a flowchart showing yet another example of the procedure for tuning control parameters in the control-parameter tuning support device according to the embodiment.
[FIG. 10]

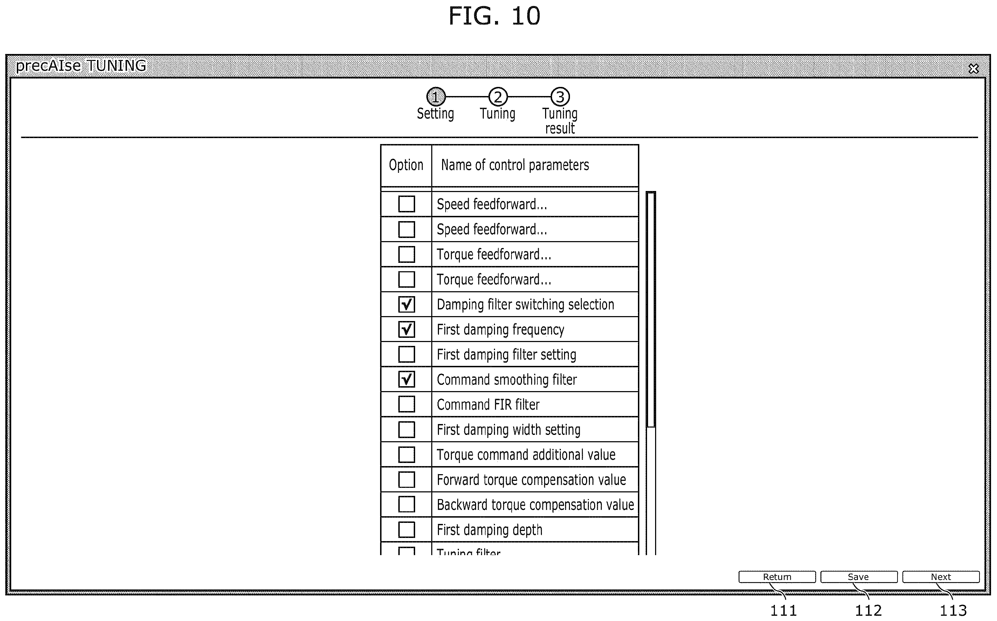

FIG. 10 is a diagram showing an example of images displayed on the display by the controller when a user registers a servo parameter of interest in advance.
[FIG. 11]

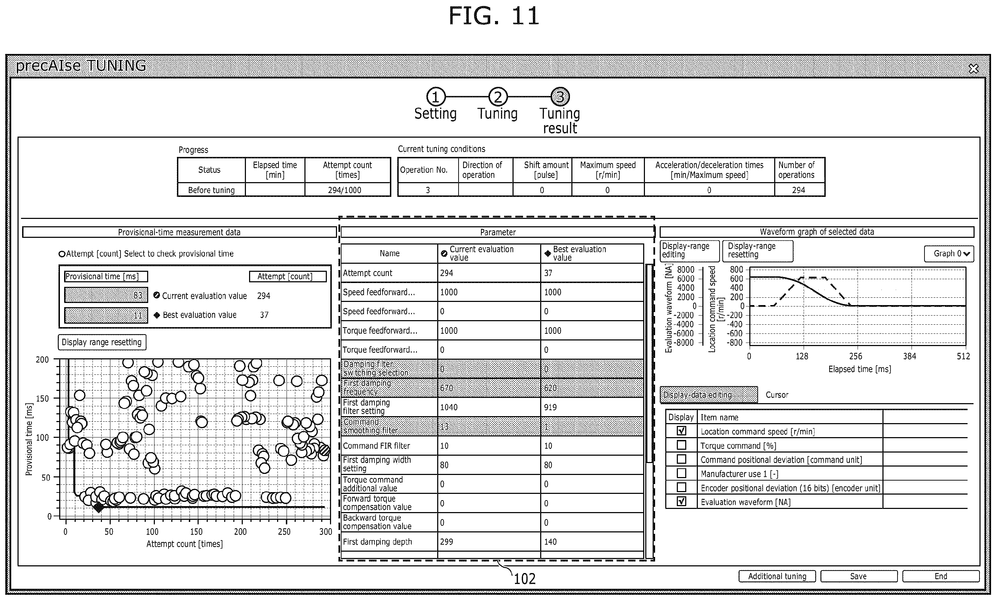

FIG. 11 is a diagram showing an example of images displayed on the display by the controller in the case of determining Yes in step S42 shown in FIG. 9.
[FIG. 12]

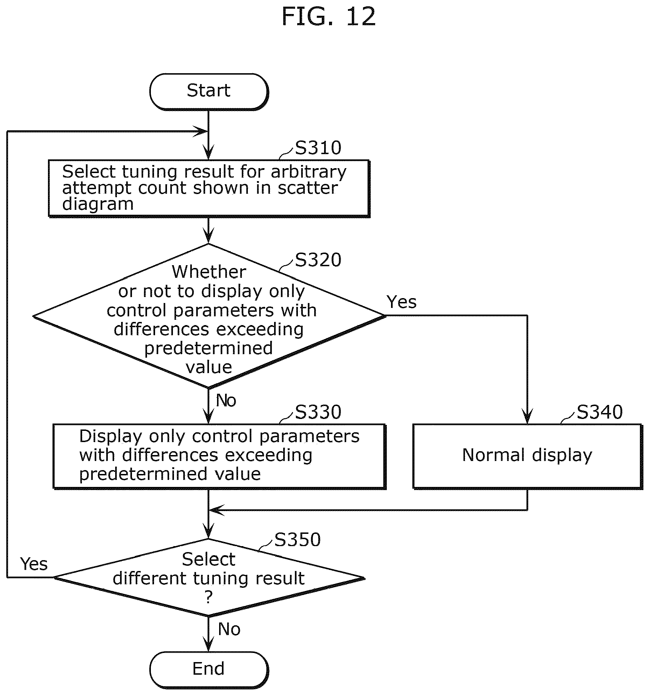

FIG. 12 is a flowchart showing yet another example of the procedure for tuning control parameters in the control-parameter tuning support device according to the embodiment.
[FIG. 13]

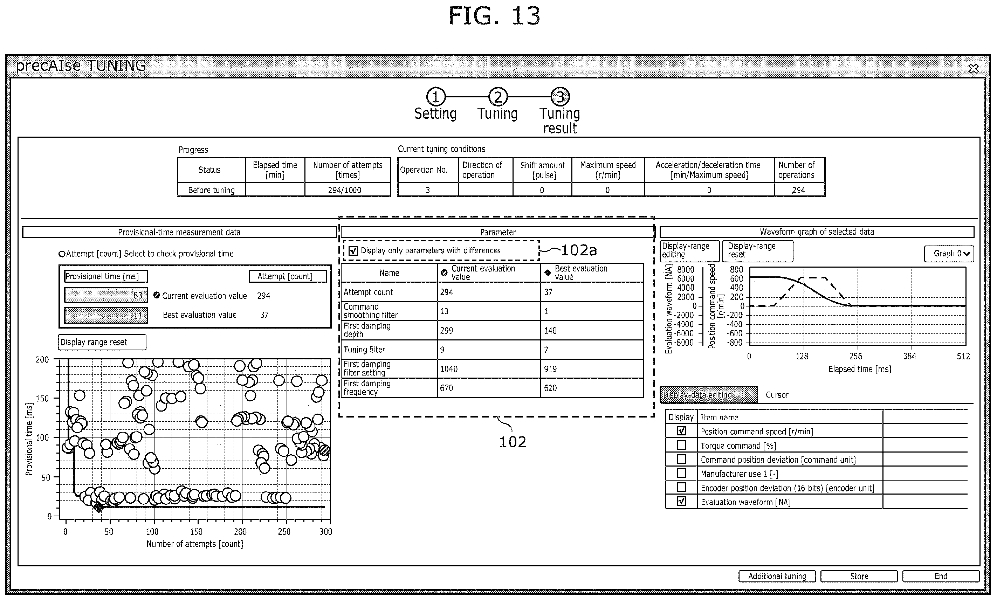

FIG. 13 is a diagram showing an example of images displayed on the display by the controller in the case of determining Yes in step S320 shown in FIG. 12.
[FIG. 14]

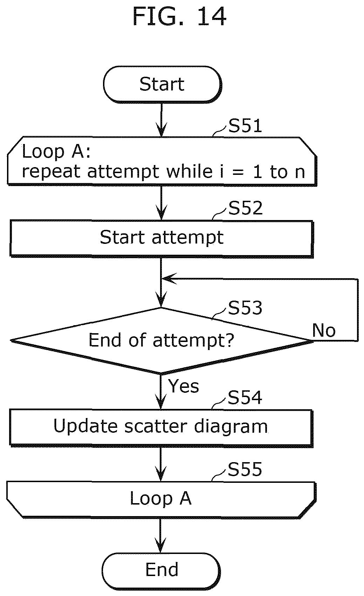

FIG. 14 is a flowchart showing a procedure in which the controller updates display content of a first image every time one attempt is completed in the control-parameter tuning support device according to the embodiment.

[Description of Embodiment]

A control-parameter tuning support device according to a first aspect of the present disclosure is a control-parameter tuning support device for supporting tuning of each value included in a control parameter group that is set in a servo control device when the servo control device controls a servomotor. The control-parameter tuning support device includes a display, a controller that causes the display to display, on one screen, at least a first image, a second image, and a third image, and an operation part that acquires an instruction concerning the first image from a user. The first image shows a relationship between an attempt count and an evaluation value for the attempt count, the relationship being obtained during a search for values included in a best control parameter group, the search being conducted by the servo control device repeating an attempt to control the servomotor while changing each value included in the control parameter group. The second image includes each of values included in a control parameter group used for an attempt count corresponding to the instruction acquired by the operation part, and each of values included in a control parameter group when a best evaluation value has been acquired. The third image includes a waveform that represents time series data regarding a positional deviation that is a difference between a target position and an observed position of an object that is servo-controlled by the servomotor during an attempt with the attempt count corresponding to the instruction acquired by the operation part.

Since the controller causes the second image to display each of the values included in the control parameter group in an arbitrary tuning result of the to-be-driven object selected in the first image and each of the values included in the control parameter group when the best evaluation value has been acquired, the user can compare each value between the control parameter groups. Besides, since the controller causes the third image to display the tuning result of the to-be-driven object for an arbitrary attempt count selected in the first image, the user can consider contents that cannot be checked by simply comparing each value between the control parameter groups displayed in the second image. This enables the user to consider factors causing the difference between the tuning result selected by the user and the best evaluation value, by comparing each value between the control parameter groups. Even in the case where there are a plurality of best evaluation values, the user can select a more reasonable control parameter group from the viewpoint of control stability of the production device by comparing each value between the control parameter groups. Accordingly, the user can obtain great support from the control-parameter tuning support device.

A control-parameter tuning support device according to a second aspect of the present disclosure is the control-parameter tuning support device according to the first aspect, in which, in the second image, among the values included in the control parameter group used for the attempt count corresponding to the instruction acquired by the operation part, a control parameter with a smallest or largest relative difference from each corresponding value included in the control parameter group when the best evaluation value has been acquired is displayed with emphasis or displayed in a specific display position on the second image.

This enables the user to easily recognize a control parameter with a small relative difference between each of the values included in the control parameter group in the tuning result selected by the user and each of the values included in the control parameter group when the best evaluation value has been acquired. Accordingly, the user can consider factors causing the difference, by comparing the tuning result selected by the user and the best evaluation value. Even in the case where there are a plurality of best evaluation values, the user can select a more reasonable control parameter group from the viewpoint of control stability of the production device by comparing each value between the control parameter groups. Accordingly, the user can obtain greater support from the control-parameter tuning support device.

A control-parameter tuning support device according to a third aspect of the present disclosure is the control-parameter tuning support device according to the first or second aspect, in which the control parameter group displayed in the second image is listed in ascending or descending order of a relative difference between each of the values included in the control parameter group used for the attempt count corresponding to the instruction acquired by the operation part and each corresponding value included in the control parameter group when the best evaluation value has been acquired.

This enables the user to easily recognize a control parameter with a small or large relative difference between each of the values included in the control parameter group in the tuning result selected by the user and each of the values included in the control parameter group when the best evaluation value has been acquired. Accordingly, the user can consider factors causing the difference, by comparing the tuning result selected by the user and the best evaluation value. Even in the case where there are a plurality of best evaluation values, the user can select a more reasonable control parameter group from the viewpoint of control stability of the production device by comparing each value between the control parameter groups. Accordingly, the user can obtain greater support from the control-parameter tuning support device.

A control-parameter tuning support device according to a fourth aspect of the present disclosure is the control-parameter tuning support device according to the first aspect, in which, in the second image, among the control parameter group used for the attempt count corresponding to the instruction acquired by the operation part, one or more control parameters selected in advance are displayed with emphasis or displayed in a specific display position on the second image.

This enables the user to easily compare the tuning result selected by the user and the best evaluation value obtained for the servo parameter of interest registered in advance by the user. Accordingly, the user can consider factors causing the difference, by comparing the tuning result selected by the user and the best evaluation value. Even in the case where there are a plurality of best evaluation values, the user can select a more reasonable control parameter group from the viewpoint of control stability of the production device by comparing each value between the control parameter groups.

Accordingly, the user can obtain greater support from the control-parameter tuning support device.

A control-parameter tuning support device according to a fifth aspect of the present disclosure is the control-parameter tuning support device according to the first aspect, in which the second image displays only a control parameter for which a difference between each of the values included in the control parameter used for the attempt count corresponding to the instruction acquired by the operation part and each corresponding value included in the control parameter group when the best evaluation value has been acquired is greater than a predetermined value.

Since the controller causes the display to display the table that shows only a control parameter for which the difference exceeds the predetermined value, the user can easily compare the tuning result selected by the user and the best evaluation value for the control parameter. This enables the user to speedily consider factors causing the difference, by comparing the tuning result selected by the user and the best evaluation value. Even in the case where there are a plurality of best evaluation values, the user can select a more reasonable control parameter group from the viewpoint of control stability of the production device by comparing each value between the control parameter groups. Accordingly, the user can obtain greater support from the control-parameter tuning support device.

A control-parameter tuning support device according to a sixth aspect of the present disclosure is the control-parameter tuning support device according to any one of the first to fifth aspects, in which the controller further causes the display to display a fourth image on the one screen, the fourth image being an image for selecting a type of a waveform displayed in a same time course as the time series data displayed in the third image.

Since the controller causes the third image to display the waveform selected by the user, the user can check only necessary waveform data displayed in the third image.

A control-parameter tuning support device according to a seventh aspect of the present disclosure is the control-parameter tuning support device according to any one of the first to sixth aspects, in which, after one attempt is completed during the search for the values included in the best control parameter group, the controller acquires an attempt count and an evaluation value for the attempt count and updates the first image to additionally display, in the first image, a relationship between the attempt count and the evaluation value acquired.

Accordingly, every time one attempt is completed, the tuning result obtained by one attempt is reflected on the first image. This enables the user to check the obtained tuning result in real time even during the search for the best control parameter group.

A control-parameter tuning support method according to an eighth aspect of the present disclosure is a control-parameter tuning support method for supporting tuning of each of values included in a control parameter group that is set in a servo control device when the servo control device controls a servomotor. The control-parameter tuning support method includes causing a display to display, on one screen, at least a first image, a second image, and a third image, and acquiring an instruction concerning the first image from a user. The first image shows a relationship between an attempt count and an evaluation value for the attempt count, the relationship being obtained during a search for values included in a best control parameter group, the search being conducted by the servo control device repeating an attempt to control the servomotor while changing each of the values included in the control parameter group. The second image includes each of values included in a control parameter group used for an attempt count corresponding to the instruction acquired in the acquiring, and each of values included in a control parameter group when a best evaluation value has been acquired. The third image includes a waveform that represents time series data regarding a positional deviation that is a difference between a target position and an observed position of an object that is servo-controlled by the servomotor during an attempt with the attempt count corresponding to the instruction acquired in the acquiring.

Since each of the values included in the control parameter group in an arbitrary tuning result of the to-be-driven object selected in the first image and each of the values included in the control parameter group when the best evaluation value has been acquired are displayed in the displaying, the user can compare each value between the control parameter groups. Besides, since, in the displaying, the third image displays the tuning result of the to-be-driven object for an arbitrary attempt count selected in the first image, the user can consider contents that cannot be checked by simply comparing each value between the control parameter groups displayed in the second image. This enables the user to consider factors causing the difference, by comparing the tuning result selected by the user and the best evaluation value. Even in the case where there are a plurality of best evaluation values, the user can select a more reasonable control parameter group from the viewpoint of control stability of the production device by comparing each value between the control parameter groups. Accordingly, the user can obtain greater support from the control-parameter tuning support method.

A program according to a ninth aspect of the present disclosure causes a computer to execute processing included in the control-parameter tuning support method according to the eighth aspect.

With the program, since the computer displays each of the values included in the control parameter group in an arbitrary tuning result of the to-be-driven object selected in the first image and each of the values included in the control parameter group when the best evaluation value has bene acquired, the user can compare each value between the control parameter groups. Besides, since the controller causes the third image to display the tuning result of the to-be-driven object for an arbitrary attempt count selected in the first image, the user can consider contents that cannot be checked by simply comparing each value between the control parameter groups displayed in the second image. This enables the user to consider factors causing the difference, by comparing the tuning result selected by the user and the best evaluation value. Even in the case where there are a plurality of best evaluation values, the user can select a more reasonable control parameter group from the viewpoint of control stability of the production device by comparing each value between the control parameter groups. Accordingly, the user can obtain greater support from the computer.

[Embodiment]

Hereinafter, an embodiment of the present disclosure is described in detail with reference to the drawings. It is to be noted that the embodiment described below provides a specific example of the present disclosure. Numerical values, constituent elements, arrangement positions and connection of constituent elements, steps, a sequence of steps, examples of display, and so on shown in the following embodiment are mere examples, and therefore do not intend to limit the scope of the present disclosure. Among the constituent elements described in the following embodiment, those that are not recited in any independent claim, which defines the generic concept of the present disclosure, are described as arbitrary constituent elements. The drawings are not necessarily precise illustrations. Substantially the same configurations are given the same reference signs throughout the drawings, and detailed descriptions thereof shall be omitted or simplified.

[Configuration]

FIG. 1 is a diagram showing an overview of production system 1 according to an embodiment.

As shown in FIG. 1, production system 1 is a system for producing products. Production system 1 includes production device 10 (one example of a target object), sensor-information gathering device 70, and control-parameter tuning support device 80. Production device 10, sensor-information gathering device 70, and control-parameter tuning support device 80 are communicably connected to one another via a communication line. Communication realized by the communication line may be cable communication or wireless communication.

Production device 10 is a device for producing products and may, for example, be any of various industrial devices installed in a factory or the like, such as assembly equipment, processing equipment, or machine equipment. Production device 10 includes to-be-driven object 20, servomotor 30, servo control device 40, encoder 50, and sensor 60.

To-be-driven object 20 is a target object that is driven by servomotor 30. For example, in the case where production device 10 is assembly equipment, to-be-driven object 20 may be a mobile unit (head) that moves relative to a substrate (not shown) so that electronic components are mounted on the substrate.

Servomotor 30 is a motor that drives to-be-driven object 20. For example, in the case where production device 10 is assembly equipment, servomotor 30 may move to-be-driven object 20 relative to a substrate.

Servo control device 40 may, for example, be a servo amplifier. Servo control device 40 controls drive of to-be-driven object 20 by driving (controlling) servomotor 30 in accordance with servo information transmitted from control-parameter tuning support device 80. The servo information is information including a control parameter group and operation patterns. The control parameter group is used by servo control device 40 to control to-be-driven object 20. The control parameter group is a parameter set including a plurality of parameters and may include, for example, gains such as a position gain, a torque gain, and an integral gain. The operation patterns refer to operation patterns of to-be-driven object 20 and may include, for example, travel distance, maximum speed, acceleration time, and deceleration time of to-be-driven object 20.

Encoder 50 detects data such as displacement of servomotor 30 and generates encoder information indicating, for example, the detected displacement of servomotor 30. Encoder 50 transmits the generated encoder information to control-parameter tuning support device 80.

Sensor 60 detects the position of to-be-driven object 20 and generates sensor information indicating, for example, the detected position of to-be-driven object 20. Sensor 60 may, for example, be a camera and transmit the generated sensor information to sensor-information gathering device 70.

Sensor-information gathering device 70 collects sensor information generated by sensor 60. Sensor-information gathering device 70 transmits the collected sensor information to control-parameter tuning support device 80.

Control-parameter tuning support device 80 is a device for supporting tuning of each of values included in a control parameter group that is set in servo control device 40 when servo control device 40 controls servomotor 30. Control-parameter tuning support device 80 may, for example, be a terminal device such as a personal computer installed in a factory or the like and may be operated by a user. Control-parameter tuning support device 80 is used to tune the aforementioned control parameter group. Control-parameter tuning support device 80 receives the encoder information transmitted from encoder 50 and the sensor information transmitted from sensor-information gathering device 70. Control-parameter tuning support device 80 also tunes the control parameter group in accordance with the encoder information and the sensor information received and transmits the servo information including the tuned control parameter group to production device 10.

FIG. 2 is a block diagram showing a functional configuration of production system 1 according to the embodiment.

As shown in FIG. 2, servo control device 40 of production device 10 includes, as a functional configuration, servo information acquirer 41, servo information outputter 42, storage 43, and controller 44.

Servo information acquirer 41 acquires (receives) servo information transmitted from control-parameter tuning support device 80. Servo information acquirer 41 may be realized by, for example, a communication module.

Servo information outputter 42 outputs (transmits) servo information acquired by servo information acquirer 41. Servo information outputter 42 may be realized by, for example, a communication module.

Storage 43 may store, for example, various types of information and programs. Storage 43 may be realized by, for example, memory.

Controller 44 performs overall control of servo control device 40. Controller 44 may be realized by, for example, a processor. That is, various functions of servo control device 40 are executed by the processor executing programs stored in memory.

As shown in FIG. 2, control-parameter tuning support device 80 includes, as a functional configuration, operation part 81, display 82, storage 83, controller 84, setter 85, operation result acquirer 86, tuner 87, tuning-result outputter 88, and servo information outputter 89.

Operation part 81 accepts inputs from a user. Specifically, operation part 81 accepts inputs such as a target performance value, a set time, and a setting count from a user. The target performance value refers to a target numerical value for an indicator of the performance of production device 10 (e.g., a settling time and vibrations of to-be-driven object 20). The settling time refers to the time required for to-be-driven object 20 to reach from a drive start position to an allowable position where the to-be-driven object can be evaluated as having reached a target position. The set time refers to a time for settling control parameters that are input in advance by a user during tuning of the control parameters. The setting count refers to the number of times control parameters input in advance by a user are changed during tuning of the control parameters. Operation part 81 may be realized by, for example, a keyboard and a mouse.

Display 82 displays various types of information. Display 82 may be realized by, for example, a liquid crystal display.

Storage 83 may store, for example, various types of information and programs. Storage 83 may be realized by, for example, memory. Note that storage 83 may store a trained model.

Controller 84 performs overall control of control-parameter tuning support device 80. Controller 84 may be realized by, for example, a processor. That is, various functions of control-parameter tuning support device 80 are executed by the processor executing programs stored in memory.

Setter 85 sets the target performance value, the set time, and the setting count in accordance with user inputs accepted by operation part 81. Setter 85 may be realized by, for example, a processor.

Operation result acquirer 86 acquires the encoder information transmitted from encoder 50 and the sensor information transmitted from sensor-information gathering device 70. Then, operation result acquirer 86 acquires an operation result of to-be-driven object 20 (i.e., an operation result of production device 10) in accordance with at least one of the encoder information or the sensor information acquired. Operation result acquirer 86 may be realized by, for example, a communication module.

Tuner 87 sets one or more to-be-tuned operation groups as operation patterns of to-be-driven object 20 during tuning of a control parameter group. Each to-be-tuned operation group includes a plurality of operating conditions. The operating conditions may include, for example, (a) an operating condition for causing to-be-driven object 20 to move 1 mm from the drive start position, (b) an operating condition for causing to-be-driven object 20 to move 5 mm from the drive start position, and (c) an operating condition for causing to-be-driven object 20 to move 10 mm from the drive start position.

In the case of operating to-be-driven object 20 according to the aforementioned operation patterns, tuner 87 tunes the control parameter group in accordance with the operation result of to-be-driven object 20 acquired by operation result acquirer 86. Then, in the case of again operating to-be-driven object 20 according to the tuned control parameter group, tuner 87 again tunes the control parameter group in accordance with the operation result of to-be-driven object 20 acquired by operation result acquirer 86. By repeatedly executing the processing described above, tuner 87 sequentially search for the best control parameter group. That is, tuner 87 executes an algorithm that solves so-called "combinatorial optimization" in which a control parameter group that allows the attainment of a desired target performance value is searched for from among a large number of control parameter groups.

Alternatively, instead of the processing described above, tuner 87 may use a trained model stored in storage 83 in the case of operating to-be-driven object 20 according to the aforementioned operation patterns so that a control parameter group is tuned in accordance with the operation result of to-be-driven object 20 acquired by operation result acquirer 86. For example, the trained model may be constructed by carrying out machine learning using, as training data, the performance of production device 10, the encoder information generated by encoder 50, and the sensor information generated by sensor 60. For example, the construction of a theoretical model in machine learning may use a neural network.

Tuning-result outputter 88 controls controller 84 to output the operation patterns set by tuner 87 and the control parameter group tuned by tuner 87. Tuning-result outputter 88 also controls controller 84 to output the operation patterns set by tuner 87 and the control parameter group tuned by tuner 87 on display 82.

Servo information outputter 89 outputs (transmits) servo information including the operation patterns and the control parameter group, which are output by controller 84, to production device 10.

[Operation of Searching for Control Parameter Group]

FIG. 3 is a sequence diagram showing a procedure of an attempt made to search for the best control parameter group by production system 1 according to the embodiment.

As shown in FIG. 3, first, tuner 87 of control-parameter tuning support device 80 sets an initial control parameter group and also sets a first to-be-tuned operation group as an initial operation pattern of to-be-driven object 20 (step S11). Then, servo information outputter 89 of control-parameter tuning support device 80 outputs servo information to production device 10, the servo information including the initial control parameter group and the operation pattern (first to-be-tuned operation group), which are set by tuner 87 (step S12).

Then, servo information acquirer 41 of servo control device 40 of production device 10 acquires the servo information from control-parameter tuning support device 80. Servo information outputter 42 of servo control device 40 outputs the servo information acquired by servo information acquirer 41 to controller 44. Controller 44 drives (controls) servomotor 30 in accordance with the servo information output from servo information outputter 42 so as to control the drive of to-be-driven object 20 (step S13). In this way, to-be-driven object 20 is operated in accordance with the servo information by servomotor 30.

Then, operation result acquirer 86 of control-parameter tuning support device 80 acquires the encoder information transmitted from encoder 50 and the sensor information transmitted from sensor 60 (i.e., sensor-information gathering device 70) (step S14). Accordingly, operation result acquirer 86 acquires the operation result of to-be-driven object 20 in accordance with at least one of the encoder information or the sensor information acquired (step S15). The operation result of to-be-driven object 20 may include, for example, attempt counts for tuning the control parameter group in order to sequentially search for the best control parameter group, and an evaluation value (settling time) for each attempt count.

Then, tuner 87 of control-parameter tuning support device 80 tunes the control parameter group in order to sequentially search for the best control parameter group in accordance with the operation result of to-be-driven object 20 acquired by operation result acquirer 86. Tuner 87 also sets a second to-be-tuned operation group different from the first to-be-tuned operation group as the operation pattern of to-be-driven object 20. Alternatively, instead of the processing described above, tuner 87 may use a trained model stored in storage 83 to tune the control parameter group in accordance with the operation result of to-be-driven object 20 acquired by operation result acquirer 86.

Then, servo information outputter 89 of control-parameter tuning support device 80 outputs, to production device 10, servo information including the control parameter group tuned by tuner 87 and the operation pattern (second to-be-tuned operation group) set by tuner 87 (step S12). Thereafter, steps S12 to S15 are repeatedly executed in the same manner as described above.

[Example of Display of Images regarding Tuning of Control Parameter Group]

FIG. 4 is a flowchart showing an example of display in which controller 84 causes display 82 to display the tuning result obtained by the search shown in FIG. 3 in control-parameter tuning support device 80 according to the embodiment. The tuning result refers to the operation result of to-be-driven object 20 acquired by operation result acquirer 86.

First, controller 84 causes display 82 to display first, second, and third images as initial display of the tuning result of to-be-driven object 20 (step S20). For example, the first image displayed on display 82 shows a scatter diagram in which the horizontal axis represents the attempt count by which the control parameter group is tuned in order to sequentially search for the best control parameter group, and the vertical axis represents the evaluation value (settling time) for each attempt count. The second and third images show information about one attempt selected from the first image. To be more specific, the second image displays each of values included in a control parameter group that corresponds to the evaluation value shown in the first image. The third image displays waveform data corresponding to the evaluation value shown in the first image. Note that one attempt selected from the first image is displayed as an initial value in the second and third images. Specifically, the information displayed in the second and third images may, for example, be the evaluation value measured for the first time, or the latest measured evaluation value.

Next, the user selects the tuning result of to-be-driven object 20 for an arbitrary attempt count shown in the scatter diagram (first image) displayed on display 82 (step S21). That is, the user selects one attempt from among a plurality of attempts displayed in the first image. Then, operation part 81 acquires the one attempt selected by the user as an instruction from the user.

Next, controller 84 displays each value included in the control parameter group for the tuning result selected by the user (second image) and waveform data (third image). Controller 84 further displays, out of the first image, each value included in the control parameter group and waveform data thereof when the best evaluation value (evaluation value with the shortest settling time) has been acquired (step S22).

If the user selects a different tuning result of to-be-driven object 20 (Yes in step S23), i.e., if the user selects another attempt from among the attempts displayed in the first image, the procedure returns to step S21 described above. In this case, the user selects another attempt from among the attempts displayed in first image (step S21).

If the user does not select a different tuning result of to-be-driven object 20 (No in step S23), i.e., if the user does not select another attempt from among the attempts displayed in the first image, control-parameter tuning support device 80 finishes helping the user to tune the control parameters.

FIG. 5 is a diagram showing an example of images displayed on display 82 by controller 84 shown in FIG. 4.

As shown in FIG. 5, controller 84 causes display 82 to display first image 101, second image 102, third image 103, fourth image 104, fifth image 105, additional tuning button 106, save button 107, and end button 108 on the same one screen.

First image 101 displays a scatter diagram in which the horizontal axis represents the attempt count by which the control parameter group is tuned in order to sequentially search for the best control parameter group, and the vertical axis represents the provisional time required for each attempt count. The provisional time required for each attempt count refers to the evaluation value (settling time) for the attempt count. Tuning results of to-be-driven object 20 shown in the scatter diagram are displayed as white circles in the scatter diagram. Among the tuning results of to-be-driven object 20 shown in the scatter diagram, the tuning result with the best evaluation value is displayed as a black rhombus in the scatter diagram. When the user has selected a tuning result of to-be-driven object 20 for an arbitrary attempt count selected by the user, the selected tuning result is displayed as a diagonally shaded circle in the scatter diagram. The selected tuning result is displayed as the current evaluation value. The solid line in the scatter diagram indicates the best evaluation value obtained for the previous attempt count. The tuning results displayed in the scatter diagram may be acquired in advance and stored in storage 83, or may be acquired in real time by operation result acquirer 86.

First image 101 also displays a table that shows the attempt count and the provisional times (settling times) for the current evaluation value and the best evaluation value.

Second image 102 displays a table that shows each value included in the control parameter group used for the attempt count corresponding to the instruction acquired by operation part 81, and each value included in the control parameter group when the best evaluation value has been acquired. That is, second image 102 displays the table that shows each value included in the control parameter group in the tuning result (i.e., current evaluation value) of to-be-driven object 20 for an arbitrary attempt count selected in first image 101 by the user, and each value included in the control parameter group when the best evaluation value has been acquired. As shown in FIG. 5, for example, the left column of the table shows the attempt count and the names of the control parameter group, the central column of the table shows the attempt count and each value included in the control parameter group when the current evaluation value has been acquired, and the right column of the table shows the attempt count and each value included in the control parameter group when the best evaluation value has been acquired.

Since controller 84 causes second image 102 to display each value included in the control parameter group in an arbitrary tuning result selected for to-be-driven object 20 in first image 101 and each value included in the control parameter group when the best evaluation value has been acquired, the user can compare each value between the control parameter groups. This enables the user to consider factors causing the difference between the tuning result selected by the user and the best evaluation value, by comparing each value between the control parameter groups. Even in the case where there are a plurality of best evaluation values, the user can select a more reasonable control parameter group from the viewpoint of control stability of production device 10 by comparing each value between the control parameter groups.

Third image 103 displays a waveform that represents time series data regarding a positional deviation that is a difference between a target position and an observed position of to-be-driven object 20 that is servo-controlled by servomotor 30 during the attempt with the attempt count corresponding to the instruction acquired by operation part 81. That is, third image 103 displays the waveform representing the time series data regarding the positional deviation that is the difference between the target position and the observed position of to-be-driven object 20 servo-controlled by servomotor 30 in an arbitrary tuning result of to-be-driven object 20 selected in first image 101 by the user. As shown in FIG. 5, for example, third image 103 may display a graph indicated by the solid line, in which the horizontal axis represents the elapsed time and the vertical axis represents the evaluation waveform with a solid line. The value of the evaluation waveform displayed on the vertical axis indicates the positional deviation that is the difference between the target position and the observed position of to-be-driven object 20 servo-controlled by servomotor 30. Specifically, the graph with the value of the evaluation waveform changing to zero is obtained when servo control device 40 controls the drive of to-be-driven object 20 until to-be-driven object 20 reaches from the drive start position to an allowable position where to-be-driven object 20 can be evaluated as having reached the target position. Third image 103 further displays a graph indicated by the broken line, in which the horizontal axis represents the elapsed time, and the vertical axis represents location command speed. The value of the location command speed displayed on the vertical axis indicates the traveling speed of to-be-driven object 20 servo-controlled by servomotor 30.

Since controller 84 causes third image 103 to display the tuning result of to-be-driven object 20 for an arbitrary attempt count selected in first image 101, the user can consider contents that cannot be checked by simply comparing each value between the control parameter groups displayed in second image 102. Specifically, by checking the waveform data shown in third image 103, the user can evaluate that the waveform data with smaller fluctuations indicates a better tuning result of to-be-driven object 20. Accordingly, in the case where there are a plurality of tuning results with the same evaluation value, the user can select a better control parameter group by comparing fluctuations in the waveform data.

Fourth image 104 displays a selection image that allows the user to select the type of a waveform to be displayed in the same time course as the time series data displayed in third image 103. The user can select a graph to be displayed, by marking a checkbox in the left column of the selection image. Note that, in the selection image, one item may be selected, or a plurality of items may be selected.

In this way, since controller 84 causes third image 103 to display the waveform selected by the user, the user can check only necessary waveform data displayed in third image 103.

Fifth image 105 displays a table of progress and a table of current tuning conditions. The table of progress displays the time elapsed since the start of tuning for obtaining the best tuning result, and the attempt count indicating how many times tuning is completed with respect to the attempt count determined by the user. The table of current tuning conditions displays the direction of operation, the amount of shift, maximum speed, and acceleration and deceleration times of to-be-driven object 20 for the latest attempt count.

Additional tuning button 106 is a button for causing controller 84 to display an image (not shown) for adding a control parameter group and an operation pattern on display 82. That is, when the user has clicked additional tuning button 106, controller 84 causes display 82 to display the image for adding a control parameter group and an operation pattern.

Save button 107 is a bottom for causing controller 84 to display, on display 82, an image (not shown) for saving data such as the tuning result displayed in first image 101 and each value included in the control parameter group when the tuning result has been acquired. That is, when the user has clicked save button 107, controller 84 causes display 82 to display the image for saving data such as the tuning result displayed in first image 101 and each value included in the control parameter group when the tuning result has been acquired.

End button 108 is a button for causing controller 84 to finish helping the user to tune the control parameter group. That is, when the user has clicked end button 108, controller 84 finishes helping the user to tune the control parameter group. For example, controller 84 may finish display of the image shown in FIG. 5 in the case of finishing helping the user to tune the control parameter group.

[Example of Display of Control Parameters Based on Relative Differences between Values of Control Parameters]

FIG. 6 is a flowchart showing another example of the procedure for tuning control parameters in control-parameter tuning support device 80 according to the embodiment.

First, a user selects a tuning result of to-be-driven object 20 for an arbitrary attempt count shown in the scatter diagram (first image 101 shown in FIG. 5) displayed on display 82 (step S31). That is, the user selects one attempt from among the attempts displayed in first image 101 shown in FIG. 5. Then, operation part 81 acquires the one attempt selected by the user as an instruction from the user.

Next, the user selects whether to display with emphasis or display at the top of the table control parameters with large (or small) relative differences between the tuning result selected by the user and the best evaluation value (step S32). Alternatively, the selection in step S32 may be made such that, if storage 52 stores information that is about step S32 and that is set in advance by the user, the user does not necessarily have to make this selection as occasion demands. That is, controller 84 may read out the information stored in storage 83 to select whether to display with emphasis or display at the top of the table the control parameter.

If the user has selected to display with emphasis or display at the top of the table the control parameter (Yes in step S32), display 82 displays, in second image 102 shown in FIG. 5, a table that displays with emphasis or displays at the top the control parameters with large (or small) relative differences between the tuning result selected by the user and the best evaluation value (step S33). Detailed description of the relative differences will be described later.

If the user has not selected to display with emphasis or display at the top of the table the control parameters (No in step S32), display 82 displays a table that neither displays with emphasis nor displays at the top the control parameters with large (or small) relative differences between the tuning result selected by the user and the best evaluation value (i.e., a normal table displayed in second image 102 shown in FIG. 5) (step S34).

Then, if the user selects a different tuning result of to-be-driven object 20 (Yes in step S35), i.e., if the user selects another attempt from among the attempts displayed in first image 101 shown in FIG. 5, the procedure returns to step S31 described above.

If the user does not select a different tuning result of to-be-driven object 20 (No in step S35), i.e., if the user does not select another attempt from among the attempts displayed in first image 101 shown in FIG. 5, control-parameter tuning support device 80 finishes helping the user to tune the control parameters.

FIG. 7 is a diagram showing a table for describing an example of calculation of the relative differences described with reference to FIG. 6.

The name shown in the first field from the left in FIG. 7 corresponds to the name shown in the left column displayed in second image 102 shown in FIG. 5. The current evaluation value shown in the second field from the left in FIG. 7 corresponds to the current evaluation value shown in the central column displayed in second image 102 shown in FIG. 5. The best evaluation value shown in the third field from the left in FIG. 7 corresponds to the best evaluation value shown in the right column displayed in second image 102 shown in FIG. 5.

The relative difference shown in the fourth field from the left in FIG. 7 represents a ratio calculated using the current evaluation value shown in FIG. 7 and the best evaluation value shown in FIG. 7. In actual tuning conducted by control-parameter tuning support device 80, the relative differences are calculated using the current evaluation value and the best evaluation value that are displayed in second image 102 shown in FIG. 5. Specifically, tuner 87 calculates the relative differences in accordance with an equation expressed as Expression 1 below:

Relative difference = ABS (1-(control parameter value in tuning result selected by user)/(control parameter value when best evaluation value has been acquired) ...(Expression 1)        (Expression 1)

As can be seen from the above expression, even in the case where the number of digits in each value varies depending on each control parameter, the calculation of the ratio enables comparison of the control parameters using the relative differences as an indicator. As shown in FIG. 7, for example, when tuner 87 calculates relative differences in accordance with Expression 1 above, B is the control parameter with a largest relative difference, and C is the control parameter with a smallest relative difference. If the control parameters have a value of zero when the best evaluation value has been acquired, tuner 87 does not perform the calculation based on Expression 1 above. That is, if the control parameters have a value of zero when the best evaluation value has been acquired, tuner 87 calculates relative differences between parameters whose values are not zero.

FIG. 8 is a diagram showing an example of images displayed on display 82 by controller 84 in the case of determining Yes in step S32 shown in FIG. 6.

As shown in FIG. 8, second image 102 displays a table that displays control parameters with larger relative differences at the top. Alternatively, second image 102 may display a table that displays control parameters with smaller relative differences at the top, or a table that turns white fields showing the names and values of control parameters black and vice versa in order to display these fields with emphasis without changing the order of display of the control parameters.

As is clear from the above description, the user can easily recognize control parameters with large or small relative differences between each value included in the control parameter group in the tuning result selected by the user and each value included in the control parameter group when the best evaluation value has been acquired. This enables the user to consider factors causing the difference, by comparing the tuning result selected by the user and the best evaluation value. Even in the case where there are a plurality of best evaluation values, the user can select a more reasonable control parameter group from the viewpoint of control stability of production device 10 by comparing each value between the control parameter groups.

[Example of Display of Control Parameters Based on Servo Parameter of Interest]

FIG. 9 is a flowchart showing yet another example of the procedure for tuning control parameters in control-parameter tuning support device 80 according to the embodiment. Before the flowchart shown in FIG. 9, a user registers a servo parameter of interest in control-parameter tuning support device 80, the servo parameter of interest being one or more control parameters selected in advance from the control parameter group used in the attempt count corresponding to the instruction acquired by operation part 81. Storage 83 stores the registered servo parameter(s) of interest. Details of the method for registering the servo parameter(s) of interest will be described later.

First, the user selects a tuning result of to-be-driven object 20 for an arbitrary attempt count shown in the scatter diagram (the first image shown in FIG. 5) displayed on display 82 (step S41). That is, the user selects one attempt from among the attempts displayed in first image 101 shown in FIG. 5. Then, operation part 81 acquires the one attempt selected by the user as an instruction from the user.

Next, controller 84 determines whether any servo parameter of interest has been set (i.e., registered) in advance (step S42).

If controller 84 has determined that a servo parameter of interest has been set (Yes in step S42), display 82 displays a table that displays with emphasis or displays at the top the registered servo parameter of interest, in the second image shown in FIG. 5 (step S43).

If controller 84 has determined that no servo parameter of interest has been set (No in step S42), display 82 displays a table that includes no registered servo parameter of interest displayed with emphasis or displayed at the top (i.e., a normal table displayed in second image 102 shown in FIG. 5) (step S44).

Then, if the user selects a different tuning result of to-be-driven object 20 (Yes in step S45), i.e., if the user selects another attempt from among the attempts displayed in the first image shown in FIG. 5, the procedure returns to step S41 described above.

If the user does not select a different tuning result of to-be-driven object 20 (No in step S45), i.e., if the user does not select another attempt from among the attempts displayed in the first image shown in FIG. 5, control-parameter tuning support device 80 finishes helping the user to tune the control parameters.

FIG. 10 is a diagram showing an example of images displayed on display 82 by controller 84 when a user registers a servo parameter of interest in advance.

As shown in FIG. 10, before tuner 87 starts to tune the best control parameter group, the user registers a servo parameter of interest in a setting image displayed on display 82. The setting image displays a table in which the names of control parameters are listed in the right column, and checkboxes are listed in the left column. The user marks a checkbox that corresponds to a control parameter that receives attention of the user among the displayed control parameters. Here, one servo parameter of interest may be registered, or a plurality of servo parameters of interest may be registered. For example, as shown in FIG. 10, the user may select "Damping filter switching selection", "First damping frequency", and "Command smoothing filter". In this case, operation part 81 accepts the selection of these control parameters, and controller 84 registers these control parameters as servo parameters of interest. Controller 84 also stores these servo parameters of interest in storage 83.

The setting image also displays return button 111, save button 112, and next button 113.

Return button 111 is a button for causing controller 84 to cause transition from the aforementioned setting image to an image (not shown) for setting a control parameter group and an operation pattern. That is, when the user has clicked return button 111, controller 84 causes the image displayed on display 82 to transition from the aforementioned setting image to the image (not shown) for setting a control parameter group and an operation pattern.

Save button 112 is a button for causing controller 84 to display, on display 82, an image (not shown) for saving conditions for the servo parameters of interest registered by the user. That is, when the user has clicked save button 112, controller 84 causes display 82 to display the image for saving conditions for the servo parameters of interest registered by the user.

Next button 113 is a button for causing controller 84 to allow tuner 87 to start tuning of the best control parameter group from the aforementioned setting image. That is, when the user has clicked next button 113, the image displayed on display 82 transitions from the aforementioned setting image to the image that allows tuner 87 to start tuning of the best control parameter.

FIG. 11 is a diagram showing an example of images displayed on display 82 by controller 84 in the case of determining Yes in step S42 shown in FIG. 9. FIG. 11 is a diagram showing an example of display on display 82 in the case of displaying with emphasis the control parameters registered in FIG. 10.

As shown in FIG. 11, second image 102 displays a table that turns white fields showing the names and values of control parameters black in order to display these fields with emphasis. Specifically, second image 102 displays a table that turns while fields showing the names and values of the control parameters "Damping filter switching selection", "First damping frequency", and "Command smoothing filter" black in order to display these fields with emphasis. Alternatively, the second image may display a table that displays control parameters with larger relative differences at the top, or a table that displays control parameters with smaller relative differences at the top.

As is clear from the above description, for each servo parameter of interest registered in advance by the user, the user can easily compare the tuning result selected by the user and the best evaluation value This enables the user to consider factors causing the difference, by comparing the tuning result selected by the user and the best evaluation value. Even in the case where there are a plurality of best evaluation values, the user can select a more reasonable control parameter from the viewpoint of control stability of production device 10 by comparing each value between the control parameter groups.

[Example of Display of Control Parameters Based on Differences between Values of Control Parameters]

FIG. 12 is a flowchart showing yet another example of the procedure for tuning control parameters in control-parameter tuning support device 80 according to the embodiment.

First, a user selects a tuning result of to-be-driven object 20 for an arbitrary attempt count shown in the scatter diagram (first image 101 shown in FIG. 5) displayed on display 82 (step S310). That is, the user selects one attempt from among the attempts shown in first image 101 in FIG. 5. Then, operation part 81 acquires the one attempt selected by the user as an instruction from the user.

Next, the user selects whether to display only control parameters whose differences between each value included in the control parameter group used in the tuning result acquired by operation part 81 and each value included in the control parameter group when the best evaluation value has been acquired exceed a predetermined value (step S320). Alternatively, the selection in step S320 may be such that if storage 52 stores information that is about step S32 and that is set in advance by the user (i.e., information as to whether to display only control parameters whose differences exceed the predetermined value), the user does not necessarily have to make this selection as occasion demands. That is, controller 84 may read out the information stored in storage 83 in order to determine whether to display only control parameters whose differences exceed the predetermined value. The predetermined value may set to a default value of zero, or may be arbitrarily changed by the user.

If the user has selected to display only control parameters whose differences exceed the predetermined value (No in step S320), controller 84 causes display 82 to display an image in which the table displayed in second image 102 shown in FIG. 5 is changed to a table that displays only control parameters whose differences from the value obtained when the best evaluation value has been acquired exceed the predetermined value (step S330).

If the user has not selected to display only control parameters whose differences exceed the predetermined value (Yes in step S320), controller 84 causes display 82 to display a table that is normally displayed in second image 102 shown in FIG. 5 (step S340).

Then, if the user has selected a different tuning result of to-be-driven object 20 (Yes in step S350), i.e., if another attempt is selected from among the attempts displayed in first image 101 shown in FIG. 5, the procedure returns to step S31 described above.

If the user has not selected a different tuning result of to-be-driven object 20 (No in step S350), i.e., if the user does not select another attempt from among the attempts displayed in first image 101 shown in FIG. 5, control-parameter tuning support device 80 finishes helping the user to tune the control parameters.

FIG. 13 is a diagram showing an example of display on display 82 in the case of determining Yes in step S320 shown in FIG. 12. Note that second image 102 in FIG. 13 additionally includes selection area 102a with a checkbox.

If the user has selected selection area 102a shown in FIG. 13 (i.e., if the user has marked the checkbox), operation part 81 accepts, as an instruction from the user, displaying only control parameters whose differences exceed the predetermined value. Thus, in accordance with the instruction from the user, controller 84 causes display 82 to display an image in which the table displayed in second image 102 shown in FIG. 5 is changed to the table that displays only control parameters whose differences exceed the predetermined value.

If the user has again selected selection area 102a (i.e., if the user has erased the checkbox), operation part 81 accepts, as an instruction from the user, not displaying only control parameters whose differences exceed the predetermined value. Thus, in accordance with the instruction from the user, controller 84 causes display 82 to display an image in which the table displaying only control parameters whose differences exceed the predetermined value is changed to the table displayed in second image 102 shown in FIG. 5 (i.e., normal display).

As is clear from the above description, since controller 84 causes display 82 to display the table that displays only control parameters whose differences exceed the predetermined value, the user can more easily compare the tuning result selected by the user and the best evaluation value for these control parameters. This enables the user to consider factors causing the difference, by speedily comparing the tuning result selected by the user and the best evaluation value. Even in the case where there are a plurality of best evaluation values, the user can select a more reasonable control parameter group from the viewpoint of control stability of production device 10 by comparing the control parameters and the best evaluation value.

[Updating of First Image]

FIG. 14 is a flowchart showing a procedure for updating display contents of first image 101 by controller 84 after completion of each one attempt in control-parameter tuning support device 80 according to the embodiment.

First, control-parameter tuning support device 80 starts to carry out attempts from 1 to n (loop A in step S51).

Next, tuner 87 starts an attempt by tuning control parameters in order to sequentially search for the best control parameter (step S52).

Controller 84 determines whether one attempt is completed (step S53).

If controller 84 has determined that one attempt has not yet been completed (No in step S53), the procedure returns to step S53. Then, controller 84 again determines whether one attempt is completed (step S53).

If controller 84 has determined that one attempt is completed (Yes in step S53), controller 84 updates the scatter diagram displayed in first image 101. That is, controller 84 updates the scatter diagram so that the newly acquired tuning result is displayed in the scatter diagram displayed in first image 101 shown in FIG. 5.

Then, if n attempts have not yet been completed (loop A in step S55), the procedure returns to step S51 and the procedure of updating is repeated (loop A in steps S51 to S55). When n attempts have been completed, controller 84 finishes the procedure for updating the scatter diagram.

In this way, every time one attempt is completed, the tuning result obtained by the one attempt is reflected on first image 101. This enables the user to check the obtained result in real time even during search for the best control parameter group.

[Advantageous Effects]

As is clear from the foregoing description, controller 84 causes second image 102 to display each value included in the control parameter group in an arbitrary tuning result of to-be-driven object 20 selected in first image 101 and each value included in the control parameter group when the best evaluation value has been acquired. This enables the user to compare each value between the control parameter groups. Besides, controller 84 causes third image 103 to display the tuning result of to-be-driven object 20 for an arbitrary attempt count selected in first image 101. This enables the user to consider contents that cannot be checked by simply comparing each value between the control parameter groups displayed in second image 102. This enables the user to consider factors causing the difference between the tuning result selected by the user and the best evaluation value, by comparing each value between the control parameter groups. Even in the case where there are a plurality of best evaluation values, the user can select a more reasonable control parameter group from the viewpoint of control stability of production device 10 by comparing each value between the control parameter groups.

[Variations]

While the control-parameter tuning support device according to one or a plurality of aspects has been described thus far with reference to the above embodiment, the present disclosure is not intended to be limited to the embodiment described above. Other embodiments such as those obtained by making various modifications conceivable by persons skilled in the art to the above-described embodiment or those constructed by any combination of constituent elements according to different embodiments may also be included in the range of the one or the plurality of aspects without departing from the scope of the present disclosure, without departing from the scope of the present disclosure.

In the above-described embodiment, each constituent element may be configured as dedicated hardware, or may be realized by executing a software program appropriate to each constituent element. Each constituent element may also be realized by a program executor such as a processor or a CPU reading out and executing a software program recorded on a recording medium such as a hard disk or semiconductor memory.

Part or all of the functions of the control-parameter tuning support device according to the above-described embodiment may be realized by a processor such as a CPU executing programs.

Some or all of the constituent elements configuring each of the above-described devices may be configured as an IC card detachable from the device or a stand-alone module. The IC card or the module described above may be a computer system that includes, for example, a microprocessor, ROM, and RAM. The IC card or the module described above may include super-multi-function LSI. The IC card or the module described above achieves its functions as a result of the microprocessor operating in accordance with computer programs. The IC card or the module may also be tamper-resistant.

[Industrial Applicability]

The control-parameter tuning support device according to the present disclosure may be useful as, for example, a device that helps tune each value included in a control parameter group that is set in a servo control device when the servo control device controls a servomotor.

[Reference Signs List]

1        production system
10       production device
20       to-be-driven object
30       servomotor
40       servo control device
41       servo information acquirer
42       servo information outputter
43       storage
44       controller

| 50 | encoder |
| 60 | sensor |
| 70 | sensor-information gathering device |
| 80 | control-parameter tuning support device |
| 81 | operation part |
| 82 | display |
| 83 | storage |
| 84 | controller |
| 85 | setter |
| 86 | operation result acquirer |
| 87 | tuner |
| 88 | tuning-result outputter |
| 89 | servo information outputter |
| 101 | first image |
| 102 | second image |
| 102a | selection area |
| 103 | third image |
| 104 | fourth image |
| 105 | fifth image |
| 106 | additional tuning button |
| 107 | save button |
| 108 | end button |
| 111 | return button |
| 112 | save button |
| 113 | next button |

**Claims**

1. A control-parameter tuning support device for supporting tuning of each value included in a control parameter group that is set in a servo control device when the servo control device controls a servomotor, the control-parameter tuning support device comprising:

a display;
a controller that causes the display to display, on one screen, at least a first image, a second image, and a third image; and
an operation part that acquires an instruction concerning the first image from a user,
wherein the first image shows a relationship between an attempt count and an evaluation value for the attempt count, the relationship being obtained during a search for values included in a best control parameter group, the search being conducted by the servo control device repeating an attempt to control the servomotor while changing each value included in the control parameter group,
the second image includes each of values included in a control parameter group used for an attempt count corresponding to the instruction acquired by the operation part, and each of values included in a control parameter group when a best evaluation value has been acquired, and
the third image includes a waveform that represents time series data regarding a positional deviation that is a difference between a target position and an observed position of an object that is servo-controlled by the servomotor during an attempt with the attempt count corresponding to the instruction acquired by the operation part.

2. The control-parameter tuning support device according to claim 1,
wherein, in the second image, among the values included in the control parameter group used for the attempt count corresponding to the instruction acquired by the operation part, a control parameter with a smallest or largest relative difference from each corresponding value included in the control parameter group when the best evaluation value has been acquired is displayed with emphasis or displayed in a specific display position on the second image.

3. The control-parameter tuning support device according to claim 2,
wherein the control parameter group displayed in the second image is listed in ascending or descending order of a relative difference between each of the values included in the control parameter group used for the attempt count corresponding to the instruction acquired by the operation part and each corresponding value included in the control

**EP 4 769 038 A1**

parameter group when the best evaluation value has been acquired.

4. The control-parameter tuning support device according to claim 1,
wherein, in the second image, among the control parameter group used for the attempt count corresponding to the instruction acquired by the operation part, one or more control parameters selected in advance are displayed with emphasis or displayed in a specific display position on the second image.

5. The control-parameter tuning support device according to claim 1,
wherein the second image displays only a control parameter for which a difference between each of the values included in the control parameter used for the attempt count corresponding to the instruction acquired by the operation part and each corresponding value included in the control parameter group when the best evaluation value has been acquired is greater than a predetermined value.

6. The control-parameter tuning support device according to claim 1,
wherein the controller further causes the display to display a fourth image on the one screen, the fourth image being an image for selecting a type of a waveform displayed in a same time course as the time series data displayed in the third image.

7. The control-parameter tuning support device according to any one of claims 1 to 6,
wherein, after one attempt is completed during the search for the values included in the best control parameter group, the controller acquires an attempt count and an evaluation value for the attempt count and updates the first image to additionally display, in the first image, a relationship between the attempt count and the evaluation value acquired.

8. A control-parameter tuning support method for supporting tuning of each of values included in a control parameter group that is set in a servo control device when the servo control device controls a servomotor, the control-parameter tuning support method comprising:

causing a display to display, on one screen, at least a first image, a second image, and a third image; and acquiring an instruction concerning the first image from a user,
wherein the first image shows a relationship between an attempt count and an evaluation value for the attempt count, the relationship being obtained during a search for values included in a best control parameter group, the search being conducted by the servo control device repeating an attempt to control the servomotor while changing each of the values included in the control parameter group,
the second image includes each of values included in a control parameter group used for an attempt count corresponding to the instruction acquired in the acquiring, and each of values included in a control parameter group when a best evaluation value has been acquired, and
the third image includes a waveform that represents time series data regarding a positional deviation that is a difference between a target position and an observed position of an object that is servo-controlled by the servomotor during an attempt with the attempt count corresponding to the instruction acquired in the acquiring.

9. A program for causing a computer to execute processing included in the control-parameter tuning support method according to claim 8.

FIG. 1

FIG. 2

# FIG. 3

Production device .10

Control-parameter tuning support device .80

Encoder/sensor .50, 60

Servo control device .40

Servo motor .30

S11
Set initial control parameter group and operation pattern

S12 Servo information

S13 Drive control

Encoder information and sensor information S14

S15
Acquire operation result

S12 Servo information

S13 Drive control

Encoder information and sensor information S14

Repeat from second time onwards

EP 4 769 038 A1

# FIG. 4

Start

S20
Display first, second, and third images on display

S21
Select tuning result for arbitrary attempt count shown in scatter diagram

S22
Display each value and waveform data of control parameter group in selected tuning result and each value and waveform data of control parameter group when best evaluation value has been acquired

S23
Select different tuning result? — Yes

No

End

# FIG. 5

precAIse TUNING

① — ② — ③
Setting   Tuning   Tuning result

105

| Progress | | | Current tuning conditions | | | | | |
|---|---|---|---|---|---|---|---|---|
| Status | Elapsed time [min] | Attempt count [times] | Operation No. | Direction of operation | Shift amount [pulse] | Maximum speed [r/min] | Acceleration/deceleration times [min/Maximum speed] | Number of operations |
| Before tuning | | 294/1000 | 3 | | 0 | 0 | 0 | 294 |

101    103

**Provisional-time measurement data**

○ Attempt [count] Select to check provisional time

| Provisional time [ms] | | Attempt [count] |
|---|---|---|
| 83 | ⊘ Current evaluation value | 294 |
| 11 | ◆ Best evaluation value | 37 |

Display range resetting

(scatter plot: Provisional time [ms] vs Attempt count [times], axes 0–300 x, 0–200 y)

**Parameter**

| Name | ⊘ Current evaluation value | ◆ Best evaluation value |
|---|---|---|
| Attempt count | 294 | 37 |
| Speed feedforward... | 1000 | 1000 |
| Speed feedforward... | 0 | 0 |
| Torque feedforward... | 1000 | 1000 |
| Torque feedforward... | 0 | 0 |
| Damping filter switching selection | 0 | 0 |
| First damping frequency | 670 | 620 |
| First damping filter setting | 1040 | 919 |
| Command smoothing filter | 13 | 1 |
| Command FIR filter | 10 | 10 |
| First damping width setting | 80 | 80 |
| Torque command additional value | 0 | 0 |
| Forward torque compensation value | 0 | 0 |
| Backward torque compensation value | 0 | 0 |
| First damping depth | 299 | 140 |

**Waveform graph of selected data**

Display-range editing    Display-range resetting    Graph 0 ⌄

(waveform graph: Evaluation waveform [NA] / Location command speed [r/min] vs Elapsed time [ms], x-axis 0, 128, 256, 384, 512)

Display-data editing    Cursor

| Display | Item name | |
|---|---|---|
| ☑ | Location command speed [r/min] | |
| ☐ | Torque command [%] | |
| ☐ | Command positional deviation [command unit] | |
| ☐ | Manufacturer use 1 [-] | |
| ☐ | Encoder positional deviation (16 bits) [encoder unit] | |
| ☑ | Evaluation waveform [NA] | |

101    102    104

Additional tuning    Save    End

106    107    108

FIG. 6

```
            ┌──────────┐
            │  Start   │
            └────┬─────┘
                 │
                 ▼            ╱S31
    ┌────────────────────────────┐
    │ Select tuning result for    │
    │ arbitrary attempt count     │
    │ shown in scatter diagram    │
    └────────────┬───────────────┘
                 │
                 ▼
              Display              ╱S32
          with emphasis
          or display at top
        control parameters with        No
        large (small) relative   ────────────┐
        differences from best                │
            evaluation                       │
              value?                         │
                 │                           │
               Yes                           │
                 ▼       ╱S33                ▼      ╱S34
    ┌────────────────────┐       ┌────────────────────┐
    │ Display with        │      │  Normal display     │
    │ emphasis or         │      │                     │
    │ display at top      │      │                     │
    └──────────┬─────────┘       └──────────┬─────────┘
               │                            │
               ◄────────────────────────────┘
               │
               ▼             ╱S35
        Yes        Select
      ◄────  different tuning result
                      ?
               │
              No
               ▼
          ┌──────────┐
          │   End    │
          └──────────┘
```

FIG. 7

| Name | Current evaluation value | Best evaluation value | Relative difference |
|---|---|---|---|
| A | 0.7 | 0.65 | 0.0769 |
| B | 18 | 30 | 0.4 |
| C | 1800 | 1700 | 0.0588 |

FIG. 8

# FIG. 9

Start

S41
Select tuning result for arbitrary attempt count shown in scatter diagram

S42
Has servo parameter of interest been set? — No →

Yes

S43
Display with emphasis or display at top servo parameter of interest

S44
Normal display

S45
Select different tuning result ?

Yes

No

End

# FIG. 10

precAIse TUNING

①——②——③
Setting   Tuning   Tuning
                   result

| Option | Name of control parameters |
|--------|----------------------------|
| ☐ | Speed feedforward... |
| ☐ | Speed feedforward... |
| ☐ | Torque feedforward... |
| ☐ | Torque feedforward... |
| ☑ | Damping filter switching selection |
| ☑ | First damping frequency |
| ☐ | First damping filter setting |
| ☑ | Command smoothing filter |
| ☐ | Command FIR filter |
| ☐ | First damping width setting |
| ☐ | Torque command additional value |
| ☐ | Forward torque compensation value |
| ☐ | Backward torque compensation value |
| ☐ | First damping depth |
| ☐ | Tuning filter |

Return    Save    Next

111    112    113

# FIG. 11

**precAIse TUNING**

①———②———③
Setting  Tuning  Tuning result

**Progress**

| Status | Elapsed time [min] | Attempt count [times] |
|---|---|---|
| Before tuning | | 294/1000 |

**Current tuning conditions**

| Operation No. | Direction of operation | Shift amount [pulse] | Maximum speed [r/min] | Acceleration/deceleration times [min/Maximum speed] | Number of operations |
|---|---|---|---|---|---|
| 3 | | 0 | 0 | 0 | 294 |

### Provisional-time measurement data

○ Attempt [count] Select to check provisional time

| Provisional time [ms] | Attempt [count] |
|---|---|
| 83 ⊘ Current evaluation value | 294 |
| 11 ◆ Best evaluation value | 37 |

Display range resetting

### Parameter

| Name | ⊘ Current evaluation value | ◆ Best evaluation value |
|---|---|---|
| Attempt count | 294 | 37 |
| Speed feedforward... | 1000 | 1000 |
| Speed feedforward... | 0 | 0 |
| Torque feedforward... | 1000 | 1000 |
| Torque feedforward... | 0 | 0 |
| Damping filter switching selection | 0 | 0 |
| First damping frequency | 670 | 620 |
| First damping filter setting | 1040 | 919 |
| Command smoothing filter | 13 | 1 |
| Command FIR filter | 10 | 10 |
| First damping width setting | 80 | 80 |
| Torque command additional value | 0 | 0 |
| Forward torque compensation value | 0 | 0 |
| Backward torque compensation value | 0 | 0 |
| First damping depth | 299 | 140 |

### Waveform graph of selected data

Display-range editing   Display-range resetting   Graph 0 ▾

Cursor

Display-data editing   Cursor

| Display | Item name | |
|---|---|---|
| ☑ | Location command speed [r/min] | |
| ☐ | Torque command [%] | |
| ☐ | Command positional deviation [command unit] | |
| ☐ | Manufacturer use 1 [-] | |
| ☐ | Encoder positional deviation (16 bits) [encoder unit] | |
| ☑ | Evaluation waveform [NA] | |

102

Additional tuning   Save   End

FIG. 12

Start

S310
Select tuning result for arbitrary attempt count shown in scatter diagram

S320
Whether or not to display only control parameters with differences exceeding predetermined value

Yes

No

S330
Display only control parameters with differences exceeding predetermined value

S340
Normal display

S350
Select different tuning result ?

Yes

No

End

# FIG. 13

**precAIse TUNING**

① — ② — ③
Setting　Tuning　Tuning result

Progress

| Status | Elapsed time [min] | Number of attempts [times] |
|---|---|---|
| Before tuning | | 294/1000 |

Current tuning conditions

| Operation No. | Direction of operation | Shift amount [pulse] | Maximum speed [r/min] | Acceleration/deceleration time [min/Maximum speed] | Number of operations |
|---|---|---|---|---|---|
| 3 | | 0 | 0 | 0 | 294 |

## Provisional-time measurement data

○ Attempt [count] Select to check provisional time

| Provisional time [ms] | Attempt [count] |
|---|---|
| 83 | ⊘ Current evaluation value　294 |
| 11 | Best evaluation value　37 |

Display range reset

*(scatter plot: Provisional time [ms] vs Number of attempts [count], X-axis 0 to 300, Y-axis 0 to 200)*

Number of attempts [count]

## Parameter — 102a

☑ Display only parameters with differences

| Name | ⊘ Current evaluation value | ◆ Best evaluation value |
|---|---|---|
| Attempt count | 294 | 37 |
| Command smoothing filter | 13 | 1 |
| First damping depth | 299 | 140 |
| Tuning filter | 9 | 7 |
| First damping filter setting | 1040 | 919 |
| First damping frequency | 670 | 620 |

102

## Waveform graph of selected data

Display-range editing　Display-range reset　　Graph 0 ▼

*(waveform graph: Evaluation waveform [NA] / Position command speed [r/min] vs Elapsed time [ms], X-axis 0 to 512)*

Elapsed time [ms]

Display-data editing　Cursor

| Display | Item name | |
|---|---|---|
| ☑ | Position command speed [r/min] | |
| ☐ | Torque command [%] | |
| ☐ | Command position deviation [command unit] | |
| ☐ | Manufacturer use 1 [-] | |
| ☐ | Encoder position deviation (16 bits) [encoder unit] | |
| ☑ | Evaluation waveform [NA] | |

Additional tuning　　Store　　End

## FIG. 14

```
        ┌─────────────┐
        │    Start     │
        └──────┬──────┘
               │          S51
        ┌──────▼──────────────────┐
        │ Loop A:                  │
        │ repeat attempt while i = 1 to n │
        └──────┬──────────────────┘
               │          S52
        ┌──────▼──────────────────┐
        │     Start attempt        │
        └──────┬──────────────────┘
               │
               ▼          S53
          ◇ End of attempt? ◇─── No
               │ Yes
               ▼          S54
        ┌──────────────────────────┐
        │  Update scatter diagram   │
        └──────┬──────────────────┘
               │          S55
        ┌──────▼──────────────────┐
        │       Loop A             │
        └──────┬──────────────────┘
               │
        ┌──────▼──────┐
        │     End      │
        └─────────────┘
```

## INTERNATIONAL SEARCH REPORT

| | International application No. |
| --- | --- |
| | **PCT/JP2023/047327** |

**A. CLASSIFICATION OF SUBJECT MATTER**

*G05B 13/02*(2006.01)i
FI:    G05B13/02 A

According to International Patent Classification (IPC) or to both national classification and IPC

**B. FIELDS SEARCHED**

Minimum documentation searched (classification system followed by classification symbols)

G05B13/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2020-31479 A (OMRON CORPORATION) 27 February 2020 (2020-02-27)<br>entire text, all drawings | 1-9 |
| A | JP 2010-146068 A (HITACHI, LTD.) 01 July 2010 (2010-07-01)<br>paragraphs [0102]-[0106], fig. 8, 10 | 1-9 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 March 2024** | **26 March 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/047327**

| Patent document cited in search report | | | Publication date (day/month/year) | Patent family member(s) | | | Publication date (day/month/year) |
|---|---|---|---|---|---|---|---|
| JP | 2020-31479 | A | 27 February 2020 | US entire text, all drawings | 2021/0294280 | A1 | |
| | | | | EP | 3843258 | A1 | |
| | | | | CN | 112425064 | A | |
| JP | 2010-146068 | A | 01 July 2010 | (Family: none) | | | |

Form PCT/ISA/210 (patent family annex) (July 2022)

**REFERENCES CITED IN THE DESCRIPTION**

**Patent documents cited in the description**

• JP 3874012 B